# EUROPÄISCHE PATENTSCHRIFT

(11) **EP 0 718 497 B1**
(45) Veröffentlichungstag und Bekanntmachung des Hinweises auf die Patenterteilung: **27.03.2002**
(21) Anmeldenummer: 95119509.8
(22) Anmeldetag: 11.12.1995
(51) Int. Cl.: F04C 13/00, F04C 15/00

(54) **Flügelzellenpumpe**
Vane pump
Pompe à palettes

(30) Priorität: 19.12.1994 DE 9420306 U
(43) Veröffentlichungstag der Anmeldung: 26.06.1996
(73) Patentinhaber: Albert Handtmann Maschinenfabrik GmbH & Co. KG, D-88396 Biberach (DE)
(72) Erfinder: Miller Claus Peter, 89250 Senden (DE); Staudenrausch Georg, 88400 Biberbach (DE)
(74) Vertreter: Grünecker, Kinkeldey, Stockmair & Schwanhäusser Anwaltssozietät

(56) Entgegenhaltungen:
- DE-A- 4 227 621
- FR-A- 1 303 685
- FR-A- 2 393 956
- GB-A- 2 076 896
- US-A- 5 127 386

## Beschreibung

Die Erfindung betrifft eine Flügelzellenpumpe zum portionsweisen Unterteilen einer pastösen und kompressiblen Masse, insbesondere Wurstbrät, die aus einem Pumpengehäuse und einem darin exzentrisch angeordneten, in Drehung versetzbaren Rotor und in diesem radial verschiebbar gelagerte Flügel besteht, die mit der Wandung des Pumpengehäuses, dem Boden und dem Deckel des Gehäuses und der Außenfläche des Rotors Förderzellen bilden und im abdichtenden Sinn zusammenwirken, wobei das Pumpengehäuse einen Bräteinlaß und einen Brätauslaß aufweist, zwischen denen sich ein Kompressionssektor und ein Dosiersektor befindet, und zumindest im Bereich des Dosiersektors ein Überdruckventil angeordnet ist.

Um eine hohe Positioniergenauigkeit mit derartigen Flügelzellenpumpen zu erzielen, wird in der DE 42 27 621 bereits eine Vorrichtung vorgeschlagen, bei der jede mit Brät gefüllte Förderzelle nach einem Kompressionssektor einem zwischen diesem und dem Ausstoßsektor angeordneten Dosiersektor durchläuft, wobei im Grenzbereich zwischen dem Kompressionssektor eine Ausgleichszylinder-Kolbeneinheit angeordnet ist. Das vom Einlaß kommende Brät gelangt in eine Flügelzelle und wird von den rotierenden Flügeln in Rotationsrichtung in den Kompressionssektor geführt, wobei es durch die Abnahme des Flügelzellenvolumens im Kompressionssektor komprimiert wird. Im Dosiersektor wird das Brät oft zu sehr komprimiert, so daß ein Druckausgleich geschaffen werden muß. Befindet sich der Flügel im Bereich der Zylinder-Kolbeneinheit, so drückt der Überdruck in der Flügelzelle den Kolben, entgegen der Federkraft der Feder nach oben, so daß hochkomprimiertes Brät von der vorauslaufenden Flügelzelle in die nachfolgende Flügelzelle, in der ein niedrigerer Druck herrscht, da diese noch mit dem Einlaß verbunden ist, über den Flügel durch den Ausgleichszylinder zurückgedrückt wird.

Die Menge des komprimierten Bräts, das zum Druckausgleich von der vorauslaufenden Förderzelle in die nachfolgende Förderzelle gedrückt werden soll, hängt von dem Volumen ab, das durch den nach oben bewegten Kolben im Zylinder gebildet ist sowie von der Drehgeschwindigkeit der Flügel. Aus diesem Grund wird der Ausgleichszylinder relativ groß dimensioniert.

FR-A-1303 685 offenbart eine Flügelzellenpumpe mit einem Rückstromkanal, der den Einlaß mit einem Kompressionsbereich kombiniert. Der Rückstrom ist mit Hilfe von Stellgliedern fest einstellbar.

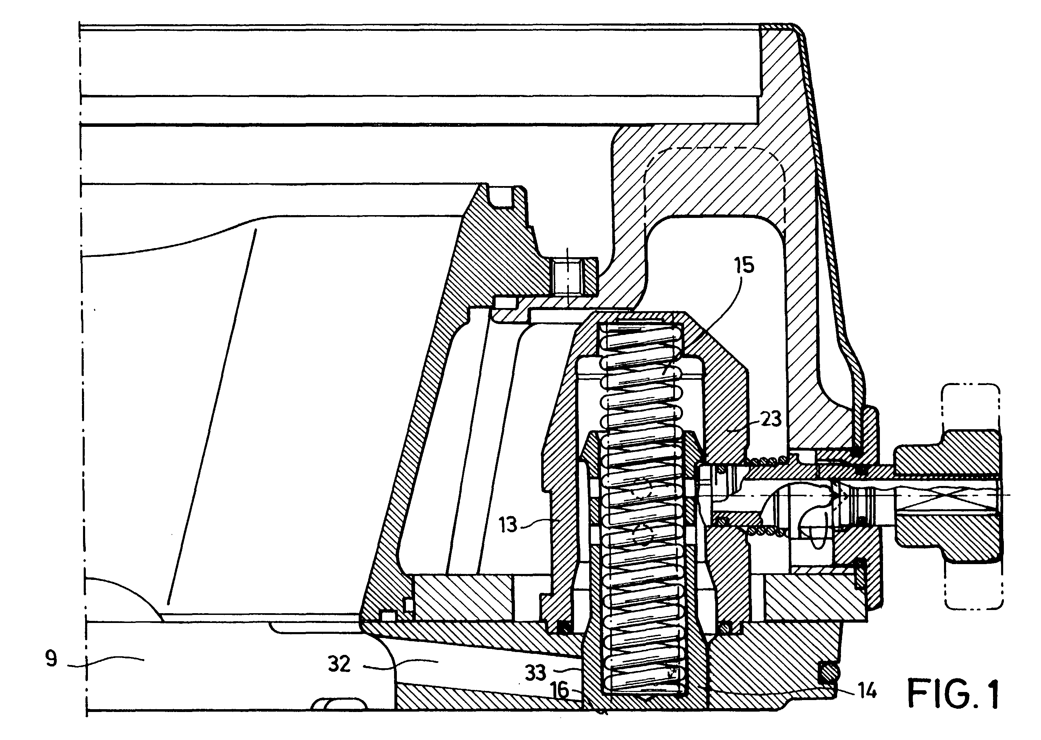

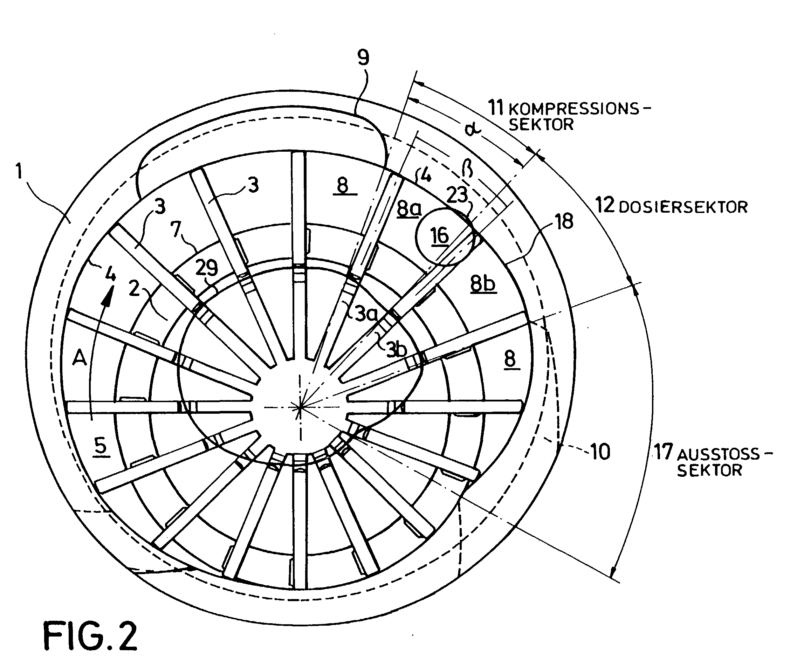

FR-A-239 3956 beschreibt eine hydraulische Pumpe, z.B. zum Beliefern eines Servoelementes. Diese Pumpe ist eine Zahnradpumpe. Zahnräder 1a und 1b (s. Figur 1) fördern ein Fluid von einem Raum 20a zu einem Raum 16. Aus diesem Raum 16 (s. Figur 2) wird im Normalbetrieb die zu fördemde Flüssigkeit durch die Öffnung 18 und den Kanal 17 zu einem Auslass 12 weiterbefördert. Im Falle einer zu großen Flüssigkeitsmenge, die von den Zahnrädem gefördert wird, öffnet sich ein Überdruckventil 14, so dass ein Bypass frei wird, durch den die Flüssigkeit durch den Kanal 20 direkt wieder in das Einlassreservoir 16 zurückströmt.

Eine Flügelzellenpumpe mit den Merkmalen des Oberbegriffs des Anspruchs 1 ist aus DE 42 27 621 A1 bekannt.

Ausgehend von diesem Stand der Technik liegt der vorliegenden Erfindung die Aufgabe zugrunde, die bekannte Flügelzellenpumpe noch weiter zu verbessern.

Diese Aufgabe wird durch eine gattungsgemäße Flügelzellenpumpe mit den Merkmalen des kennzeichnenden Teils des Anspruchs 1 gelöst. Bevorzugte Ausführungsformen sind Gegenstand der Unteransprüche.

Erfindungsgemäß wird diese Aufgabe dadurch gelöst, daß ein Rückstromkanal derart angeordnet ist, daß das Überdruckventil beim Ansprechen das Innere des Pumpengehäuses über den Rückstromkanal mit dem Einlaß verbindet.

Die erfindungsgemäße Flügelzellenpumpe bringt den Vorteil mit sich, daß der Druck im Dosiersektor kontinuierlich, unabhängig von der Abmessung des Überdruckventils geregelt werden kann. Die erfindungsgemäße Lösung kann auf einfache und kostengünstige Weise realisiert werden.

Gemäß einem bevorzugten Ausführungsbeispiel ist als Überdruckventil ein Ausgleichszylinder, in welchem ein federbeaufschlagter Ausgleichskolben gelagert ist, vorgesehen. Über die Federkonstante der verwendeten Feder kann der Druck im Dosierbereich auf einfache Weise eingestellt werden.

Es ist weiter vorteilhaft, wenn der Ausgleichszylinder im Boden oder Deckel des Pumpengehäuses angeordnet ist und zum Inneren des Pumpengehäuses geöffnet ist, wobei der Kolbenboden in einer geschlossenen Stellung eine Verbindungsöffnung zwischen Ausgleichszylinder und Rückstromkanal verschließt und bei erhöhtem Druck im Dosiersektor, entgegengesetzt der Federkraft, nach oben gedrückt wird, so daß die Verbindungsöffnung zumindest teilweise freigelegt wird. In dieser Anordnung ist das Überdruckventil platzsparend angeordnet.

Gemäß einem bevorzugten Ausführungsbeispiel der Flügelzellenpumpe ist der Winkel α des Kompressionssektors etwa gleich groß wie der Sektorwinkel β einer Förderzelle wobei der Ausgleichszylinder axial angeordnet ist und sich sowohl in dem Kompressionssektor als auch in den Dosiersektor erstreckt.

Vorteilhafterweise ist der Rückstromkanal als Bohrung im Deckel zwischen Überdruckventil und Einlaß ausgebildet. So kann die Flügelzellenpumpe, die bereits aus dem Stand der Technik bekannt ist, durch eine einfache Bohrung verbessert werden, wobei keine teueren Bauteile erforderlich sind.

Die vorliegende Erfindung soll anhand der nachfolgenden Zeichnungen näher erläutert werden.
- Fig. 1: zeigt einen axialen Teilschnitt eines Ausführungsbeispiels einer Flügelzellenpumpe gemäß der vorliegenden Erfindung.
- Fig. 2: zeigt eine Querschnittsansicht von oben auf eine Flügelzellenpumpe ohne Deckel.
- Fig. 3: zeigt einen axialen Teilschnitt einer Flügelzellenpumpe gemäß dem Stand der Technik.

Wie insbesondere Fig. 2 zeigt, besteht die Flügelzellenpumpe aus einem Pumpengehäuse 1 und einem darin exzentrisch angeordneten, in Drehung versetzbaren Rotor 2 und in diesem radial verschiebbar gelagerte Flügel 3, die mit der Wandung 4 des Pumpengehäuses 1, dem Boden und dem Deckel 6 des Gehäuses 1 und der Außenfläche 7 des Rotors 2 Förderzellen 8 bilden und im abdichtenden Sinn zusammenwirken, wobei das Pumpengehäuse 1 einen Bräteinlaß 9 und einen Brätauslaß 10 aufweist, zwischen denen sich ein Kompressionssektor 11 und ein Dosiersektor 12 befindet.

Der Kompressionssektor 11 erstreckt sich über einen Winkelbereich α, der etwa gleich groß ist wie der Winkelbereich β des Sektors einer Förderzelle 8, der durch die Mittellinie zweier benachbarter Flügel 3 gebildet wird.

Im Bereich der Innenwand 4 des Pumpengehäuses 1 und - in Drehrichtung des Rotors 2 gesehen - im Endbereich des Kompressionssektors 11 ist im Deckel 6 des Pumpengehäuses 1 ein axial gerichteter Ausgleichszylinder 13 angeordnet, der auch in Fig. 1 gezeigt ist. Der Ausgleichszylinder 13 ist zum Inneren des Pumpengehäuses 1 hin geöffnet. Im Ausgleichszylinder 13 ist ein Ausgleichskolben 14 gleitend gelagert. Der Ausgleichskolben 14 weist in seinem rückwärtigen Ende eine axial gerichtete Bohrung auf, in welcher eine Druckfeder 15 gelagert ist, die sich gegen den Boden 20 des Ausgleichszylinders 13 abstützt und unter Vorspannung steht, so daß sie den Ausgleichskolben 14 nach vorwärts, d.h. in Richtung auf das Innere des Pumpengehäuses 1 drückt.

In einer geschlossenen Stellung des Überdruckventils, d.h. des Ausgleichskolbens 14 verläuft der Kolbenboden 16 des Ausgleichskolbens 14 mit der Innenwand des Deckels 6 des Pumpengehäuses 1 bündig, so daß der Kolbenboden mit der Innenwand des Deckels 6 eine glatte Fläche bildet und die Flügel 3 an einem freien Darübergleiten nicht gehindert sind.

Der Ausgleichszylinder 13 ist in eine Sacklochbohrung 23 des Deckels 6 eingepreßt und fixiert.

Nach Öffnen des Deckels 6 des Pumpengehäuses 1 kann der Ausgleichskolben 14 aus dem Ausgleichszylinder 13 genommen werden.

So kann beispielsweise die Feder 15 durch eine stärkere oder schwächere Druckfeder ausgewechselt werden.

Der Durchmesser des Ausgleichszylinders 13 bzw. des Ausgleichskolbens 14 ist so gewählt, daß er sich mit Rücksicht auf die oben beschriebene Lage sowohl in dem Kompressionssektor 11 als auch in dem Dosiersektor 12 erstreckt.

Wie aus Fig. 2 ersichtlich ist, weist die Innenwand des Pumpengehäuses 1 einen von einem Kreisbogen abweichenden Konturverlauf 18 auf, der den Kompressionssektor 11 und dem Ausstoßsektor 17 bestimmt. Im Bereich des Dosiersektors 12 verläuft die Kontur nach einem Kreisbogen mit dem Mittelpunkt im Rotormittelpunkt.

Der Rotor 2 dreht sich zusammen mit den Flügeln 3 in Pfeilrichtung A.

Wie in Fig. 1 dargestellt, ist zwischen Ausgleichszylinder 13 und Einlaß 9 eine Bohrung 32 als Rückstromkanal unter einem Winkel von z.B. 11° zur Horizontalen, in dem Deckel vorgesehen. Der Rückstromkanal ist über die Verbindungsöffnung 33 mit dem Ausgleichszylinder 13 verbunden. Spricht das Überdruckventil, also die Ausgleichszylinder-Kolbeneinheit, aufgrund eines überhöhten Drucks im Inneren des Pumpengehäuses an, so hebt sich der Kolben 14 und so wird nach und nach eine Verbindung zwischen Einlaß 9 und dem Inneren des Pumpengehäuses 1 im Kompressions-/Dosiersektorbereich über die Verbindungsöffnung 33 hergestellt. So kann Brät bei zu hohem Druck im Inneren der Förderzelle über den Rückstromkanal 32 in den Einlaß 9 kontinuierlich zurückgedrückt werden. Dabei muß sich der Kolben 14 nicht ganz heben, so daß nur ein Teil der Verbindungsöffnung 33 freigelegt ist. Der Öffnungsgrad der Verbindungsöffnung ist druckabhängig.

Die Funktionsweise der vorliegenden Erfindung wird nachfolgend näher erläutert.

Das Brät wird über den Einlaß 9 in die Flügelzellenpumpe eingebracht. Die Förderzellen 8 durchlaufen jeweils in Pfeilrichtung A nacheinander den Kompressionssektor 11, den Dosiersektor 12 und den Ausstoßsektor 17.

Während jede gefüllte Förderzelle 8 den Kompressionssektor durchläuft, erfolgt aufgrund des Konturverlaufs 18 eine Kompression des in der jeweiligen Förderzelle befindlichen Bräts derart, daß das Brät je nach Kompressibilität entsprechend der Volumenverkleinerung verdichtet wird.

Die Förderzellen mit verdichtetem Brät gelangt anschließend in den Dosiersektor 12. Dort verläuft zwar die Kontur nach einem Kreisbogen, das Brät wird aber dennoch noch etwas mehr verdichtet, so lange der nachlaufende Flügel 3a der Förderzelle 8a noch den Kompressionssektor 11 durchläuft.

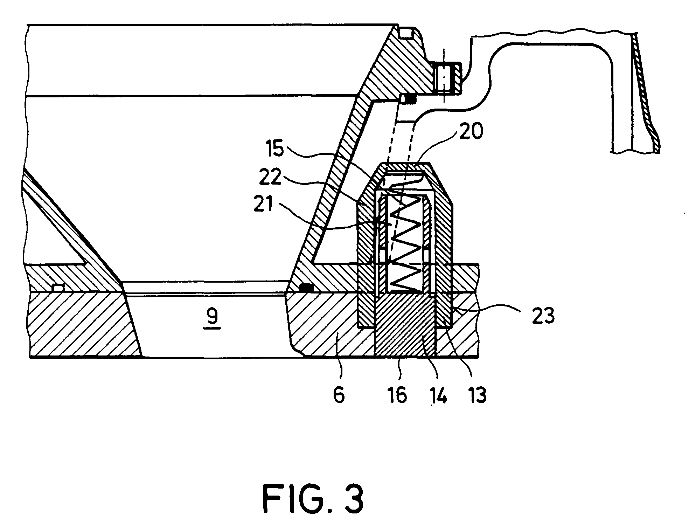

Wie bereits erläutert, steigt der Druck in einer Förderzelle 8b an, wenn sich diese beispielsweise zwischen Kompressions- und Dosiersektor befindet. Bei einem bestimmten Druck in diesem Bereich wird die Feder 15 nach oben gedrückt, so daß sich der Kolben 14 nach oben bewegt. Durch die Wahl der Federkonstante kann der Druck im Inneren des Pumpengehäuses 1 bestimmt werden, bei dem sich der Kolben so heben soll, daß die Verbindungsöffnung 33 zum Rückstromkanal 32 zumindest teilweise freigelegt wird. Ist eine Verbindung zwischen Einlaß 9 und der Flügelzelle 8 gegeben, so kann hochkomprimiertes Brät über den Rückstromkanal in den Einlaß 9 zurückgedrückt werden, so daß sich ein gewünschter Druck in der jeweiligen Flügelzelle einstellen kann. Somit ist eine kontinuierliche Regelung des Dosiersektordrucks auf einfache und zuverlässige Art möglich. Im Grunde ist es nicht zwingend, das Überdruckventil genau zwischen Kompressions- und Dosiersektor anzubringen, wie dies zuvor beschrieben wurde. Ist dies allerdings der Fall, so kann, wenn sich beispielsweise die Flügelzelle 8b und die Flügelzelle 8a beide im Bereich des Kolbenbodens befinden und darüber hinaus der Flügelzellenbereich 8a noch mit dem Einlaß 9 verbunden ist, auch noch komprimiertes Brät von der Zelle 8b im Dosiersektor über den Flügel 3b in die Flügelzelle 8a, in der ein niedrigerer Druck herrscht, gedrückt werden wie dies beispielsweise auch detailliert in Fig. 2 bis 7 der zuvor zitierten Offenlegungsschrift DE 42 27 621 beschrieben ist.

Zusammenfassend kann festgestellt werden, daß durch das erfindungsgemäße Konzept ein ausreichender Druckausgleich unabhängig von der Abmessung des Ausgleichszylinders gegeben ist.

## Patentansprüche

1. Flügelzellenpumpe zum portionsweisen Unterteilen einer pastösen und kompressiblen Masse, insbesondere Wurstbrät, die aus einem Pumpengehäuse (1) und einem darin exzentrisch angeordneten, in Drehung versetzbaren Rotor (2) und in diesem Radial verchiebbar gelagerten Flügeln (3) besteht, die mit der Wandung (4) des Pumpengehäuses (1), dem Boden (5) und dem Deckel (6) des Gehäuses (1) und der Außenfläche (7) des rotors (2) Förderzellen (8) bilden und im abdichtenden Sinn zusammen wirken, wobei das Pumpengehäuse (1) einen Bräteinlaß (9) und einen Brätauslass (10) aufweist, zwischen denen sich ein Kompressionssektor (11) und ein Dosiersektor (12) befindet, und zumindest im Bereich des Dosiersektors ein Überdruckventil (13,14) angeordnet ist, das abhängig vom Druck, den die komprimierte Masse ausübt, öffnet, und wobei der Kompressionsektor derart ausgestaltet ist, dass sich das Volumen einer Flügelzelle verringert, während sie den Kompressionssektor passiert, und der Dosiersektor (12) derart ausgestaltet ist, dass das Volumen der Flügelzelle konstant bleibt, während sie den Dosiersektor passiert,
**dadurch gekennzeichnet, dass**
ein Rückstromkanal (32) derart angeordnet ist, dass das Überdruckventil (13, 14) beim Ansprechen das Innere des Pumpengehäuses (1) im Kompressions/Dosiersektorbereich über den Rückstromkanal (32) mit dem Einlaß (9) verbindet.

2. Flügelzellenpumpe nach Anspruch 1, **dadurch gekennzeichnet, daß** als Überdruckventil (13,14) ein Ausgleichszylinder (13), in welchem ein federbeaufschlagter Ausgleichskolben (14) gelagert ist, vorgesehen ist.

3. Flügelzellenpumpe nach Anspruch 2, **dadurch gekennzeichnet, daß** der Ausgleichszylinder im Boden (5) oder Deckel (6) des Pumpengehäuses angeordnet ist und zum Inneren des Pumpengehäuses (1) hin geöffnet ist, wobei der Kolbenboden (16) in einer geschlossenen Stellung eine Verbindungsöffnung 33 zwischen Ausgleichszylinder und rückstromkanal verschließt und bei erhöhtem Druck im Dosiersektor (12) entgegengesetzt der Federkraft nach oben gedrückt wird, so daß die Verbindungsöffnung (33) zumindest teilweise freigelegt wird.

4. Flügelzellenpumpe nach Anspruch 3, **dadurch gekennzeichnet, daß** der Winkel α des Kompressionssektors (11) etwa gleich groß ist wie der Sektorwinkel β einer Förderzelle (8) und der Ausgleichszylinder (13) axial angeordnet ist und sich sowohl in den Kompressionssektor (11) als auch in den Dosiersektor (12) erstreckt.

5. Flügelzellenpumpe nach Anspruch 1, **dadurch gekennzeichnet, daß** der Rückstromkanal als Bohrung im Deckel (6) zwischen Überdruckventil (13,14) und Einlaß (9) ausgebildet ist.

## Claims

1. A vane pump used for dividing into portions a pasty and compressible substance, in particular sausage meat, and comprising a pump housing (1) and a rotor (2) which is arranged eccentrically in said pump housing and which is adapted to be rotated, and further comprising vanes (3) which are supported within said rotor (2) such that they are radially displaceable, said vanes (3) defining with the wall (4) of the pump housing (1), the base (5) and the cover (6) of said housing (1), as well as the outer surface (7) of the rotor (2), vane cells (8) and cooperating sealingly with said components, and said pump housing (1) having a sausage meat inlet (9) and a sausage meat outlet (10) which have arranged between them a compression sector (11) and a dosing sector (12), and a pressure-relief valve (13, 14) being arranged at least in the area of the dosing sector, said pressure-relief valve opening in dependence upon the pressure applied by the compacted substance, and said compression sector being implemented such that the volume of a vane cell decreases while said vane cell passes the compression sector, and said dosing sector (12) being implemented such that the volume of the vane cell remains constant while said vane cell passes the dosing sector,
**characterized in that** a back-flow passage (32) is arranged in such a way that, when the pressure-relief valve (13, 14) responds, said valve (13, 14) will connect the interior of the pump housing (1) in the compression-sector/dosing-sector area to the inlet (9) via the back-flow passage (32).

2. A vane pump according to claim 1, **characterized in that** a compensating cylinder (13) is provided as a pressure-relief valve (13, 14), said compensating cylinder (13) having supported therein a compensating piston (14) which is acted upon by a spring.

3. A vane pump according to claim 2, **characterized in that** the compensating cylinder is arranged in the base (5) or in the cover (6) of the pump housing and is open towards the interior of said pump housing (1), the piston crown (16) closing a connection opening (33) between the compensating cylinder and the back-flow passage, when it is at a closed position, and being urged upwards in response to high pressure in the dosing sector (12) against the force exerted by the spring so that the connection opening (33) will be opened at least partially.

4. A vane pump according to claim 3, **characterized in that** the angle α of the compression sector (11) approximately corresponds to the sector angle β of a vane cell (8), and that the compensating cylinder (13) is arranged axially and extends in the compression sector (11) as well as in the dosing sector (12).

5. A vane pump according to claim 1, **characterized in that** the back-flow passage is a hole provided in the cover (6) between the pressure relief valve (13, 14) and the inlet (9) .

## Revendications

1. Pompe à ailettes pour la subdivision par portions d'un mélange pâteux et compressible, en particulier de la chair à saucisse, qui comprend un carter de pompe (1) et un rotor (2) disposé dedans de façon excentrique et pouvant être mis en rotation et des ailettes (3) logées de façon coulissante dans le sens radial, qui forment des cellules de transport (8) avec la paroi (4) du carter de pompe (1), le fond (5) et le couvercle (6) du carter (1) et la surface extérieure (7) du rotor (2) et agissent conjointement dans le sens d'une étanchéité, le carter de pompe (1) présentant une entrée (9) et une sortie (10) pour la chair à saucisse, entre lesquelles se trouvent un secteur de compression (11) et un secteur de dosage (12), et une soupape de surpression (13, 14) étant disposée au moins dans la zone du secteur de dosage, laquelle s'ouvre en fonction de la pression exercée par le mélange comprimé, et le secteur de compression étant conçu de telle façon que le volume d'une cellule à ailette se réduit, alors qu'elle passe dans le secteur de compression, et le secteur de dosage (12) étant conçu de telle façon que le volume de la cellule à ailette reste constant, alors qu'elle passe dans le secteur de dosage, **caractérisée en ce qu'**un conduit de reflux (32) est disposé de telle façon que la soupape de surpression (13, 14) relie, lors de la réaction, l'intérieur du carter de pompe (1) dans la zone du secteur de compression/secteur de dosage à l'entrée (9) via le conduit de reflux (32).

2. Pompe à ailettes selon la revendication 1, **caractérisée en ce qu'**il est prévu comme soupape de surpression (13, 14) un cylindre d'équilibrage (13), dans lequel est logé un piston d'équilibrage (14) sollicité par ressort.

3. Pompe à ailettes selon la revendication 2, **caractérisée en ce que** le cylindre d'équilibrage est disposé dans le fond (5) ou le couvercle (6) du carter de pompe et est ouvert en direction de l'intérieur du carter de pompe (1), le fond de piston (16) fermant dans une position fermée une ouverture de liaison (33) entre le cylindre d'équilibrage et le conduit de reflux et étant appuyé dans le sens opposé à la force de ressort vers le haut en cas de pression élevée dans le secteur de dosage (12), de telle sorte que l'ouverture de liaison (33) soit libérée au moins partiellement.

4. Pompe à ailettes selon la revendication 3, **caractérisée en ce que** l'angle α du secteur de compression (11) est à peu près égal à l'angle de secteur β d'une cellule de transport (8) et le cylindre d'équilibrage (13) est disposé dans le sens axial et s'étend aussi bien dans le secteur de compression (11) que dans le secteur de dosage (12).

5. Pompe à ailettes selon la revendication 1, **caractérisée en ce que** le conduit de reflux est conçu comme un perçage dans le couvercle (6) entre la soupape de surpression (13, 14) et l'entrée (9).
